# EUROPÄISCHE PATENTSCHRIFT

(11) **EP 3 269 005 B1**
(45) Veröffentlichungstag und Bekanntmachung des Hinweises auf die Patenterteilung: **28.07.2021**
(21) Anmeldenummer: 16709071.1
(22) Anmeldetag: 10.03.2016
(51) Int. Cl.: H01M 10/0562, H01M 10/39, C03C 3/04, C03C 10/00, C03B 19/06, C04B 35/01, C03B 32/02, H01M 6/18, C03C 4/18, C03C 8/08, C03C 3/097, H01M 10/36

(54) **NATRIUMIONEN LEITENDES ELEMENT FÜR DIE ANWENDUNG IN ELEKTROCHEMISCHEN ZELLEN SOWIE EIN VERFAHREN ZU DESSEN HERSTELLUNG**
ELEMENT CONDUCTING SODIUM IONS FOR USE IN ELECTROCHEMICAL CELLS AND METHOD FOR PRODUCING IT
ÉLÉMENT CONDUCTEUR D'IONS SODIUM DESTINÉ À ÊTRE UTILISÉ DANS DES CELLULES ÉLECTROCHIMIQUES ET PROCÉDÉ DE FABRICATION DE CET ÉLÉMENT

(30) Priorität: 12.03.2015 DE 102015204465
(43) Veröffentlichungstag der Anmeldung: 17.01.2018
(73) Patentinhaber: Fraunhofer-Gesellschaft zur Förderung der angewandten Forschung e.V., 80686 München (DE)
(72) Erfinder: SCHILM, Jochen, 01445 Radebeul (DE); KUSNEZOFF, Mihails, 01309 Dresden (DE); WAGNER, Dörte, 01189 Dresden (DE); ROST, Axel, 01239 Dresden (DE)
(74) Vertreter: Pfenning, Meinig & Partner mbB
(86) Internationale Anmeldenummer: PCT/EP2016/055132
(87) Internationale Veröffentlichungsnummer: WO 2016/142469

(56) Entgegenhaltungen:
- DE-A1-102011 121 236
- US-A- 5 134 044
- US-A- 5 134 044
- NECHAEV G V ET AL: "Conductivity in sodium-yttrium-silicate and sodium-yttrium-phosphate glass", GLASS PHYSICS AND CHEMISTRY, PLEIADES PUBLISHING, US, Bd. 41, Nr. 1, 15. Februar 2015 (2015-02-15), Seiten 64-67, XP035450428, ISSN: 1087-6596, DOI: 10.1134/S1087659615010174 [gefunden am 2015-02-15]
- OKURA TOSHINORI ET AL: "Synthesis and Na+conduction properties of Nasicon-type glass-ceramics in the system Na2O-Y2O3-R2O3-P2O5-SiO2(R=rare earth) and effe", SOLID STATE IONICS, Bd. 262, 18. November 2013 (2013-11-18), Seiten 604-608, XP028855854, ISSN: 0167-2738, DOI: 10.1016/J.SSI.2013.10.043

## Beschreibung

Die Erfindung betrifft ein Verfahren zur Herstellung Natriumionen leitender Elemente für Anwendungen in elektrochemischen Zellen, mit einer keramischen Natrium-Ionen leitenden Komponente, die als Festelektrolyt und Separator in beispielsweise Hochtemperaturbatterien (Typ Natrium-Schwefel oder Natrium-NiCl2 - ZEBRA-Batterie) Verwendung finden kann.

Solche Festelektrolyte werden üblicherweise aus einer Na-ionenleitenden Variante von Al₂O₃-Keramiken (sog. Na-Beta-Al₂O₃) als monolithische tubulare Röhren, die einseitig geschlossen sind, über konventionelle keramische Technologien, wie Pressen und Sintern bei hohen Temperaturen (1500 °C-1600 °C) hergestellt. Sowohl der verwendete Werkstoff, wie auch die Technologiekette sind mit verschiedenen Nachteilen behaftet. Während die prinzipiell verwendeten keramischen Rohstoffe kostengünstig und einfach bereitzustellen sind, ist die Sinterung dieser keramischen Werkstoffe mit hohen Anforderungen verbunden.
1. Zur Erzielung einer hohen ionischen Leitfähigkeit muss eine bestimmte β-Modifikation möglichst einphasig während der Sinterung ausgebildet werden, was nur durch bestimmte Zusätze/Additive und Randbedingungen bei der Sinterung in Grenzen realisierbar ist.
2. Für die Sinterung dieser keramischen Werkstoffe sind Temperaturen zwischen 1500 °C und 1600 °C notwendig. Aufgrund der Tatsache, dass der Werkstoff in hohem Maße bewegliche Na-Ionen enthält, sind diese unter Sinterbedingungen volatil und dampfen aus den Sinterkörpern ab. In Folge dessen verändert sich die Stöchiometrie bzw. die lonenleitfähigkeit des Werkstoffs und es kommt zu Korrosionsreaktionen mit der Ofenauskleidung. Dies bedingt spezielle und aufwändige Ofen- bzw. Sintertechnologien.
3. Das leitfähige Beta-Aluminat gilt nicht als eine außerordentlich mechanisch stabile Strukturkeramik, da sie keine hohen spezifischen Festigkeiten aufweist. So müssen die Röhren mit entsprechenden Wandstärken ausgeführt werden, um eine geeignete Stabilität zu erreichen. Diese Randbedingung geht zu Lasten der lonenleitfähigkeit, die sich umgekehrt proportional zur Wandstärke verhält. Geringe Wandstärken des Festelektrolyten sind für eine hohe Leistungsdichte der daraus hergestellten elektrochemischen Zelle erforderlich
4. Die großen Dimensionen der Röhren führen dazu, dass etablierte keramische Presstechnologien (heiß und kalt) an ihre Grenzen stoßen und eine zuverlässige, ausschussarme Herstellung kaum mehr möglich ist. Alternative Formgebungsverfahren (z.B. Extrusion) erreichen bis heute nicht die erforderlichen Parameter (Leitfähigkeit, Festigkeit), die eigentlich mit Pressprozessen erzielt werden können.

Gesucht werden daher Möglichkeiten, um möglichst dünne, hermetisch dichte und Natrium-Ionen leitende Membranen zu realisieren, die eine kostengünstigere, zuverlässigere und flexiblere Herstellung der für die elektrochemischen Zellen, wie Hochtemperaturbatterien notwendigen Festelektrolyte / Separatoren zur Verfügung stellen zu können.

Die Natrium-Schwefel-Technologie als Grundlage für eine Hochtemperaturbatterie ist seit den 1960-er Jahren bekannt, als erkannt wurde, dass die Verbindung NaAl₁₁O₁₇ bei ca. 300 °C für Natriumionen leitend wird. Das Bestreben zur Weiterentwicklung der Natrium-Schwefel-Batterie leitet sich u.a. aus ihrer vergleichsweise hohen Energiedichte, ihres hohen Wirkungsgrads und ihrer hohen Zyklenfestigkeit ab. Ferner sind die verwendeten Materialien z.B. im Vergleich zur Lithium-Ionen-Technologie kostengünstiger. Die Technologie der Hochtemperatur-Natrium-Schwefel-Batterie hat Nachteile, wobei die hohe Betriebstemperatur von ca. 300 °C an erster Stelle steht. Die Selbstentladung ist dabei aber vernachlässigbar. Es müssen vor allem thermische Verluste bei längeren Standzeiten berücksichtigt werden. Nachteilig sind auch die hohe Korrosivität in Zusammenhang mit flüssigem Natrium und die bekannte Empfindlichkeit der Festkörperelektrolyte gegenüber (Luft-) Feuchtigkeit. An die Elektrolyte werden zugleich folgende Forderungen gestellt: hohe lonenleitfähigkeit, niedrige elektronische Leitfähigkeit, hohe Dichte, mechanische Stabilität und Unempfindlichkeit gegenüber Korrosion. Die wesentliche Ausfallursache ist in der Regel der Bruch des keramischen Elektrolyten, der mit der Gefahr verbunden ist, dass Schwefel schlagartig mit flüssigem Natrium exotherm reagiert. Als Werkstoff in Hochtemperatur-Natrium-Schwefel-Batterien wird derzeit das binäre Oxid Na-Beta-Al₂O₃ (hier auch NatriumAluminat), das zusätzlich mit anderen Alkali- und Erdalkalioxiden dotiert sein kann, angesehen. Es fungiert gleichzeitig als polykristalliner Festkörperelektrolyt und Separator und stellt im Einsatzfall eine nicht-stöchiometrische Verbindung dar ((1,0 - 1,6).Na₂O.(5-11)Al₂O₃).

Bei solchen Natrium-Schwefel- bzw. Natrium-NiCl₂ (ZEBRA)-Batterien wird als Bauform für einen Beta-Al₂O₃-Festelektrolyten / Separator ein an einer Seite offener röhrenförmiger Körper eingesetzt, in dem flüssiges Natrium enthalten ist. Außerhalb dieses Körpers ist dabei NiCl₂ oder Schwefel angeordnet. Im Unterschied zu dieser konventionellen Bauweise sollten umgekehrte Anordnungen möglich sein, bei denen sich der Schwefel bzw. das NiCl₂-Salz im Innern der keramischen Röhre und die Natrium-Schmelze außerhalb befinden.

An der Ausführung als halbseitig geschlossene Röhre hat sich in den vergangenen Jahrzehnten seit Beginn der Arbeiten auf diesem Gebiet wenig geändert.

Die Herstellung derart geformter keramischer Festelektrolyte als einseitig geschlossene Rohre erfolgt durch unaxiales Kaltpressen und druckloses Sintern an Luft. Ein Problem stellt das Abdampfen von Natrium unter Sinterbedingungen und die damit verbundene Veränderung der Stöchiometrie und der Leitfähigkeit der Na-Beta-Aluminat-Phase dar. Um eine möglichst hohe Ionenleitfähigkeit zu erzielen, ist es notwendig einen möglichst einphasigen Werkstoff mit der bestimmten β-Phase (s.g. β"-Phase) zu realisieren. Zusätzlich kommt es durch das abdampfende Natrium zu Korrosionsreaktionen mit Ofenkomponenten, was wiederum die Verwendung einer stabilen und möglichst dichten Ofenauskleidung beispielsweise aus Spinell (MgAlO₄) oder MgO erforderlich macht.

Dementsprechend orientiert sich eine Vielzahl an bekannten technischen Lösungen an dieser Ausführungsform, die auch inhärent an die bereits beschriebenen keramischen Technologien gekoppelt ist. Dabei werden normalerweise monolithische keramische Komponenten, die ausschließlich aus dem Werkstoff Natrium-Beta-Aluminat gefertigt sind, eingesetzt.

Von dieser Ausführungsform abweichend sind technische Lösungen bekannt, bei denen ein Kompositaufbau für einen Festelektrolyten gewählt worden ist. Bei diesem Aufbau eines Festelektrolyten übernimmt ein einseitig geschlossenes poröses und nicht Natrium-Ionen leitendes Rohr aus Alpha-Aluminiumoxid die Funktion der tragenden Komponente. Diese tragende Komponente wird auf einer Außenseite mit einer 5 µm bis 500 µm dicken Beschichtung aus dichtem Natrium-Beta-Aluminat versehen.

Diese Ausführungsform ist dahingehend von Vorteil, dass das poröse Alpha-Al₂O₃-Rohr eine gute mechanische Stabilität gewährleistet und die dünne Na-β-Al₂O₃-Schicht einen geringen Widerstand aufweist. Sie erfüllt dabei aber keine mechanische Funktion. Damit kann der Innenwiderstand einer aus diesem Festelektrolyten aufgebauten elektrochemischen Zelle deutlich gesenkt werden. Nachteilig ist an diesem Aufbau, der zwar in mehreren Schritten realisierbar ist, dass die Beta-Aluminat Schicht ebenfalls bei Temperaturen oberhalb von 1500 °C gesintert werden muss und damit den gleichen zuvor beschriebenen Nachteilen unterliegt, wie monolithische Komponenten aus diesem Werkstoff. Es ist mit einem Abdampfen von Natrium sowie auch mit einer Wechselwirkung beider Werkstoffe während des Sinterprozesses zu rechnen. Damit besteht die Gefahr einer veränderten Stöchiometrie der ionenleitfähigen Phase.

So ist aus US 5,134,044 A ein Glas-Grafit-Bindungssystem für Natrium-Schwefel-Batterien bekannt.

Nechaev G. V. u.a. beschreiben in "Conductivity in sodium-yttrium-silicate and sodium-yttrium-phosphate glass"; Glas Physics and Chemistry; Pleiades Publishing US; Bd. 41; Nr. 1; 15. Februar 2015; Seiten 64- 67; XP035450428; ISSN: 1087-6596; DOI: 10.1134/S108765961501010174 elektrische Eigenschaften solcher Gläser.

DE 10 2011121 236 A1 betrifft einen Festkörperelektrolyt für Lithium-Luft oder Lithium-Wasser-Akkumulatoren.

Verschiedene Glaskeramiken mit darin enthaltenden Phosporverbindungen sind von Okura T u.a. in "Synthesis and Na+conduction properties of Nasicontype glass-ceramics in the system Na2O-Y2O3-R203-P2O5-SiO2(R=rare earth) and effect of Y substitution"; Solid State Ionics; Bd. 262; Seiten 604-608; XP028855854; ISSN: 0167-2738; DOI: 10.1016/J.SSI.2013.10.043 beschrieben.

DE 31 29 679 A1 betrifft ein galvanisches Element mit einem porösen, die Kathodensubstanz enthaltenden Festkörperelektrolyt-Sintergerüst.

Von S. Suda, u.a. sind in "Preparation of Na/S cell using silicophosphate in the Na2O-Y2O3-P2O5-SiO2 system and measurement of the transport number of sodium ion by the electromotive force method"; Phosphorus Research Bulletin; Vol. 4; (1994); S. 123-128; XP055618104.

Es ist daher Aufgabe der Erfindung Natriumionen leitende Elemente, wie Festelektrolyte und/oder Separatoren für elektrochemische Anwendungen zur Verfügung zu stellen, die eine hohe und reproduzierbar einhaltbare lonenleitfähigkeit, bei gleichzeitig ausreichender mechanischer Festigkeit aufweisen und dabei eine vereinfachte und kostengünstigere Herstellbarkeit gegeben ist.

Die Erfindung ist ein Verfahren gemäß Anspruch 1. Die bevorzugten Ausführungen sind wie in den abhängigen Ansprüchen definiert.

Ein poröses Substrat fungiert als mechanisch stabile Membran und kann als einzelne Komponente gefertigt werden. Vorteilhaft können elektronisch leitende keramische Werkstoffe, wie z.B. Nb-TiO₂, Ca₁₋ₓLaₓTiO₃ oder Sr₁₋ₓYₓTiO₃, die bei niedrigen Sauerstoffpartialdrücken eine hohe Elektronenleitung (s.g. n-Typ Leiter) zeigen, für die Herstellung des Substrats eingesetzt werden. Geeignete leitfähige poröse Substrate können aber auch aus einem Metall oder einer Metalllegierung bestehen. Die Elektronenleitung des Substrates soll dabei helfen, die Elektronen von der Elektrolytoberfläche zum Stromsammler zu transoptieren und damit die innere Kontaktierung der elektrochemisch aktiven Bereiche der Zelle erleichtern.

Auf dem porösen Substrat wird an einer Oberfläche eine Natrium-Ionen leitende Beschichtung ausgebildet. Die gesinterte Beschichtung besteht aus einem glaskeramischen Werkstoff des Systems (Na₂O-SiO₂-R2₂O₃-R1₂O₃; R1=Sc, Y, La und/oder B und R2= P, Sb, Bi, Sn, Te, Zn und/oder Ge). Es ist denkbar, dass anstelle oder in Ergänzung der bereits genannten 3-wertigen Kationen auch weitere 3-wertige Oxide vom Typ R1₂O₃ in Frage kommen, ohne die Leitfähigkeit wesentlich zu verändern. Aus bestimmten Zusammensetzungen dieses Systems lassen sich glaskeramische Werkstoffe herstellen, die über hohe Anteile an Natrium-Ionen-leitenden Kristallphasen verfügen und lonenleitfähigkeiten aufweisen, die denen kommerzieller Natrium-Beta-Aluminat-Qualitäten zumindest gleichwertig sind bzw. auch überlegen sein können.

Die Zusammensetzungen der Glaskeramiken sollten insbesondere dazu geeignet sein, eine Kristallphase mit der Stöchiometrie Na₅R1Si₄O₁₂ (R1=Sc, Y, La und/oder B) auszubilden, da diese besonders hohe spezifische Leitfähigkeiten aufweist. Das Additiv R2₂O₅, das die Aufgabe eines Sinteradditivs zur Separierung des Sinter- und des Kristallisationsvorganges übernehmen kann. Als Additiv kann bevorzugt P₂O₅ eingesetzt werden. Neben oder anstelle von P₂O₅ können als ähnlich oder gleich wirkende Oxide, Sb₂O₃, Sb₂O₅, Bi₂O₃, SnO₂, TeO₂, ZnO,GeO₂ eingesetzt werden.

Die glaskeramische Beschichtung kann alternativ auch direkt während des Einbrandes aus einer Mischung geeigneter pulverförmiger Ausgangsstoffe hergestellt werden, die nominal der Zusammensetzung der Glaskeramik entsprechen und nach dem Einbrand auch den gleichen Natrium-Ionen leitenden Phasenbestand aufweisen. Hinsichtlich der verwendeten Ausgangsstoffe sollen folgende exemplarische Möglichkeiten genannt werden:
- Mischung der Oxide aus Rohstoffpulvern in stöchiometrischer Zusammensetzung
- Glaspulver mit einer von der gewünschten Glaskeramik abweichenden Zusammensetzung, das erst durch Reaktion mit weiteren zugesetzten pulverförmigen Oxiden und/oder Glaspulvern eine Glaskeramik mit der Zielzusammensetzung ergibt.

Darüber hinaus kann die Mischung der Ausgangsstoffe neben Oxiden und Gläsern auch Salze oder andere die jeweiligen Kationen beinhaltende Verbindungen enthalten.

Dementsprechend basiert die Herstellung der leitfähigen Beschichtung auf Pulvern bzw. Pulvermischungen, die unter Beimischung weiterer Hilfsstoffe nach zusätzlichen Prozessschritten in eine für die Aufbringung von Beschichtungen geeignete Form überführt werden können. Solche Applikationsformen können z.B. Suspensionen sein, die allgemein dadurch gekennzeichnet sind, dass eine pulverförmige feste Phase in einer flüssigen Phase mit oder ohne weitere Hilfsstoffe gleichmäßig verteilt ist.

Es sind eine Vielzahl von Verfahren bekannt, mit denen solche Suspensionen als Beschichtungen auf feste Oberflächen aufgebracht werden können. Als Beispiele sind hier das Siebdrucken, das Rakeln, das Aufsprühen und das beschichten mittels Tauchen genannt. Ein Fachmann kann solche Suspensionen in geeigneter Weise verändern, damit auch andere Beschichtungsverfahren in Frage kommen können. Ein Auftrag kann auch mittels Plasmaspritzen erfolgen.

Bei der Ausbildung einer solchen Beschichtung kann eine freie Schwindung und Kristallisation mit Glas bildenden Ausgangskomponenten schon bei Temperaturen < 1000 °C erreicht werden. Damit können kristallisierte für Natriumionen ionenleitfähige Elemente bereits bei Prozesstemperaturen unterhalb von 1000°C hergestellt werden. Die gesinterte Beschichtung erreicht Dichten von mehr als 95% der theoretischen Dichte und ist damit hermetisch dicht, da sie, wenn überhaupt, nur eine geschlossene Porosität aufweist.

Bei der Erfindung kann ein Pulver, mit einer geeigneten Zusammensetzung zur Ausbildung leitfähiger kristalliner Phasen, zu einer Paste oder einer Suspension (Schlickern) aufbereitet werden und damit das poröse Substrat an einer Oberfläche, also bei einem an einer Seite offenen porösen Körper von innen oder von außen beschichtet werden. Nach erfolgter Trocknung und Entbinderung organischer Komponenten kann diese Schicht auf dem porösen Substrat eingebrannt werden.

Die Verwendung eines kristallisierenden Glaswerkstoffes aus dem System Na₂O-SiO₂-R2₂O₃-R1₂O₃ für die Ausbildung der Beschichtung bietet dabei verschiedene Vorteile:
1. Eine bereits ausreichende Sintertemperatur von ≤ 1000 °C bis maximal 1100 °C und darunter, verringert ein Abdampfen von Na₂O aus der Schicht nahezu vollständig, wodurch eine angestrebte Stöchiometrie bezüglich der gewünschten Kristallphasen besser realisierbar und reproduzierbar einhaltbar ist.
2. Weiterhin werden aufgrund der geringeren Sintertemperatur unerwünschte Nebenreaktionen mit dem porösen Substratwerkstoff gegenüber einem bisher erforderlichen Temperaturniveau von 1500 °C und darüber hinaus erheblich reduziert.
3. Das Aufsintern einer kristallisierenden Glasschicht des Systems Na₂O-SiO₂-R2₂Oₛ-R1₂O₃ bietet zudem den Vorteil, dass mechanische Spannungen durch ein viskoses Fließen des geschmolzenen Glases abgebaut werden können, was einen positiven Effekt auf die Rissfreiheit der Beschichtung bei der Herstellung und der thermischen Zyklisierung der fertigen Komponente im Betrieb hat.

Für die Herstellung wird ein Pulver folgender Zusammensetzung eingesetzt werden:
SiO₂ mit einem Anteil von 47 mol-% bis 63 mol-%, Na₂O mit einem Anteil von 33 mol-% bis 43 mol-%, R1₂O₃ mit einem Anteil von 3 mol-% bis 14 mol-% und R2₂O₅ mit einem Anteil von 0,1 mol-% bis 10 mol-%. Dabei sind R1 Yttrium, Scandium, Lanthan und/oder Bor und R2 Phosphor, Antimon, Bismut, Zinn, Tellur, Zink und/oder Germanium.

Um die Rissbildung in der Beschichtung zu vermeiden, sollten sich der thermische Ausdehnungskoeffizient (α) des porösen Substrats und des kristallisierten Beschichtungswerkstoffs nur geringfügig (z.B. Delta α < 1,5 ppm/K) unterscheiden. Dabei sollte der thermische Ausdehnungskoeffizient der Beschichtung möglichst geringer als der thermische Ausdehnungskoeffizient des porösen Substrats sein, um die Beschichtung bei abgekühltem Zustand und im Betrieb unter Druckspannungen zu halten und damit eine Rissbildung in der Beschichtung zu vermeiden.

Mit der Erfindung können folgende Vorteile erreicht bzw. Nachteile vermieden werden:
a. Im Vergleich zu dicken, monolithischen Festelektrolyten/Separatoren ist es möglich, deutlich dünnere aber ebenfalls gasdichte und ionenleitfähige Beschichtungen auf einem stabilen Substrat als Träger herzustellen, wodurch sich bei vergleichbarer spezifischer lonenleitfähigkeit eine entsprechend höhere absolute lonenleitfähigkeit des Festelektrolyten/Separators ergibt.
b. Durch Einsatz eines porösen aber stabilen und technologisch etablierten Substrats, auf das die ionenleitfähige funktionelle Beschichtung aufgebracht worden ist, kann die Ausschussquote der Produktion im Vergleich zu monolithischen Festelektrolyten aus reinem Beta-Aluminat gesenkt werden.
c. Man kann auf eine Presstechnologie verzichten, da man beispielsweise poröse, nicht leitfähige β-Al₂O₃-Substrate oder aus anderen porösen Werkstoffen gebildete Substrate, insbesondere Rohre auch über kostengünstigere Gieß- bzw. kontinuierliche Extrusionsverfahren herstellen kann. Ebenso kann die Beschichtung des porösen Substrats über kontinuierlich durchführbare und damit kostengünstigere Verfahren erfolgen.
d. Durch die Möglichkeit, eine ionenleitfähige Beschichtung bei Temperatur von 1000 °C und darunter sintern zu können, kann eine kostengünstigere Ofentechnologie verwendet werden. Es kann auch auf zusätzliche Brennhilfsmittel verzichtet werden, da bei diesen Temperaturen keine nennenswerte Verdampfung von Natrium erfolgt.

Nachfolgend soll die Erfindung anhand von Beispielen näher erläutert werden.

### Beispiel 1:

- Schmelzen eines Gemisches mit der Zusammensetzung 53mol-% SiO₂, 38 mol-% Na₂O, 6 mol-% Y₂O₃ und 4 mol-% P₂O₅ in einem Platin-Tiegel für 2h bei 1500 °C mit anschließendem Abfritten der Schmelze in Wasser und einer nachfolgenden Trocknung über 12 h bei 150 °C.
- Vormahlung der Fritte in einer mit Hartmetallauskleidung versehenen Scheibenschwingmühle auf einen mittleren Partikeldurchmesser von ca. 125 µm nach Absiebung.
- Feinmahlung des erhaltenen Pulvers in einem Attritor mit Ethanol als Mahlmedium auf eine mittlere Partikelgröße von d₅₀ = 2 µm.
- Aufbereitung dieses Pulvers zu einer Paste mit einem Feststoffgehalt von 65 Ma.-% unter Verwendung von Ethylcellulose als Binder und Terpineol als Lösungsmittel.
- Manuelle Aufbringung der Paste als Schicht mit einem Kunststoffrakel auf eine Oberfläche eines porösen Al₂O₃-Rohrs als Substrat (Porosität > 40% Porendurchmesser > 1µm).
- Trocknung der Paste für 1h bei 120 °C an Luft.
- Einbrand der Schicht an Luft nach folgendem Profil:
RT - 2 K/min --> 450 °C/1 h -2 K/min --> 900 °C/1 h - 2K/min --> RT.
- Nach dem Einbrand wurden über mikroskopische Analysen an Querschliffen Schichtdicken zwischen 150µm und 250µm ermittelt.
- Messungen der lonenleitfähigkeit an einem Hochtemperaturmessplatz (Eigenbau) unter Verwendung einer Salzschmelze (NaNO₃/NaNO₂) als Flüssigelektrolyt wurden folgende spezifische Leitfähigkeiten ermittelt.

| Temperatur [°C] | Leitfähigkeit [S cm⁻¹] |
|---|---|
| 230 | 0,051 |
| 250 | 0,059 |
| 275 | 0,071 |
| 300 | 0,085 |
| 310 | 0,091 |
| 320 | 0,095 |
| 330 | 0,11 |

### Beispiel 2

- Schmelzen eines Gemisches mit der Zusammensetzung 53 mol-% SiO₂, 38 mol-% Na₂O, 6 mol-% Y₂O₃ und 4 mol-% P₂O₅ in einem Platin-Tiegel für 2h bei 1500 °C mit anschließendem Abfritten der Glasschmelze in Wasser und Trockung über einen Zeitraum von 12h bei 150°C.
- Vormahlung der erhaltenen Fritte in einer mit Hartmetallauskleidung versehenen Scheibenschwingmühle auf einen mittleren Durchmesser von ca. 125 µm nach Absiebung.
- Feinmahlung des Pulvers in einem Attritor mit Ethanol als Mahlmedium auf eine mittlere Partikelgröße von d₅₀ = 2 µm.
- Aufbereitung des Pulvers zu einem wässrigen Schlicker (Suspension) mit einem Feststoffgehalt von 70 Ma.-% unter Verwendung von handelsüblicher Zusatzstoffe als Stabilisatoren und Dispergierstoffen.
- Ein poröses und einseitig geschlossenes Al₂O₃-Rohr als Substrat (Porosität >40%, Porendurchmesser > 1µm) wird in den Schlicker getaucht, so dass das offene Ende des Substrats aus dem Schlicker herausragt und die äußere Oberfläche des Rohres mit dem Schlicker beschichtet ist.
- An dem offenen Ende des Rohres wird nun ein Vakuum mit einem Unterdruck von 1 mbar -10 mbar gegenüber dem Atmosphärendruck angelegt und für 10 Minuten gehalten. Dadurch wird die Suspension in das Innere des Rohres gesaugt und es scheiden sich Partikel als Schicht auf der äußeren Oberfläche ab.
- Trocknung des auf diese Weise an der nach außen weisenden Oberfläche beschichteten Al₂O₃-Rohres für 15 h bei 150 °C an Luft Sintern der Schicht an Luft nach folgendem Profil:
RT - 2 K/min --> 450°C/1h -2K/min --> 900°C/1h - 2K/min --> RT.
- Nach dem Einbrand wurden über mikroskopische Analysen an Querschliffen Schichtdicken zwischen 400µm und 700µm ermittelt.
- Messungen der lonenleitfähigkeit an einem Hochtemperaturmessplatz (Eigenbau) unter Verwendung einer Salzschmelze (NaNO₃/NaNO₂) als Flüssigelektrolyt wurden folgende spezifische Leitfähigkeiten ermittelt.

| Temperatur [°C] | Leitfähigkeit [S cm⁻¹] |
|---|---|
| 230 | 0,049 |
| 250 | 0,058 |
| 275 | 0,069 |
| 300 | 0,084 |
| 310 | 0,089 |
| 320 | 0,093 |
| 330 | 0,10 |

## Patentansprüche

1. Verfahren zur Herstellung eines Natriumionen leitenden Elements für die Anwendung in elektrochemischen Zellen, insbesondere als Festelektrolyt/Separator in Hochtemperaturbatterien, bei dem auf einer Oberfläche eines porösen Substrats eine Beschichtung ausgebildet ist, die mit dem System Na₂O-SiO₂ -R₂O₅-R1₂O₃, wobei R1=Sc, Y, La und/oder B und R2= P, Sb, Bi, Sn, Te, Zn und/oder Ge ist, gebildet ist, **dadurch gekennzeichnet, dass** ein mit SiO₂ mit einem Anteil von 47 mol-% bis 63 mol-%, Na₂O mit einem Anteil von 33 mol-% bis 43 mol-%, R1₂O₃ mit einem Anteil von 3 mol-% bis 14 mol-% und R2₂O₅ mit einem Anteil von 0,1 mol-% bis 10 mol-% gebildetes Pulver in Form einer dieses Pulver enthaltenden Paste oder Suspension auf eine Oberfläche des porösen Substrats, das als Schicht aufgebracht und anschließend zur Ausbildung einer Beschichtung auf der Oberfläche des Substrates eine Sinterung bei einer Temperatur von maximal 1100 °C durchgeführt wird, wobei R1 Scandium, Yttrium, Lanthan und/oder Bor und R2 Phosphor, Antimon, Bismut, Zinn, Tellur, Zink und/oder Germanium sind.

2. Verfahren nach dem vorhergehenden Anspruch, **dadurch gekennzeichnet, dass** die Schicht durch Aufrakeln, Aufsprühen, Tauchen, Plasmaspritzen oder durch Vakuumschlickergießen auf der Oberfläche des Substrats vor dem Sintern ausgebildet wird.

3. Verfahren nach einem der vorhergehenden Ansprüche, **dadurch gekennzeichnet, dass** ein Substrat, das aus Al₂O₃, Mullit, Spinell, Fosterit, ZrO₂, einem silikatischen keramischen Werkstoff, einem elektrisch leitenden keramischen Werkstoff oder einem Metall oder einer Metalllegierung gebildet ist, eingesetzt wird.

4. Verfahren nach einem der vorhergehenden Ansprüche, **dadurch gekennzeichnet, dass** ein elektrisch leitender keramischer Substratwerkstoff, der aus Nb-dotiertem TiO₂, Ca₁₋ₓLaₓTiO₃ oder Sr₁₋ₓYₓTiO₃ bzw. einer Mischung dieser Komponenten mit Al₂O₃, Mullit, Spinell, Fosterit, ZrO₂ oder einem silikatischen keramischen Werkstoff besteht, eingesetzt wird.

5. Verfahren nach einem der vorhergehenden Ansprüche, **dadurch gekennzeichnet, dass** ein Substrat eingesetzt wird, das eine Porosität im Bereich 30 % bis 80 % aufweist.

## Claims

1. A method of producing a sodium ion conducting element for use in electrochemical cells, in particular as a solid electrolyte/separator in high-temperature batteries, wherein a coating formed with the system Na₂O-SiO₂-R₂O₅-R1₂O₃, where R1=Sc, Y, La and/or B and R2=P, Sb, Bi, Sn, Te, Zn and/or Ge, is formed on a surface of a porous substrate,
**characterized in that** a powder formed with SiO₂ with a proportion of 47 mol% to 63 mol%, Na₂O with a proportion of 33 mol% to 43 mol%, R1₂O₃ with a proportion of 3 mol% to 14 mol% and R2₂O₅ with a proportion of 0.1 mol% to 10 mol% is applied in the form of a paste or suspension containing this powder to a surface of the porous substrate, which is applied as a layer, and then sintering is carried out at a temperature of at most 1100°C to form a coating on the surface of the substrate, where R1 is scandium, yttrium, lanthanum and/or boron and R2 is phosphorus, antimony, bismuth, tin, tellurium, zinc and/or germanium.

2. The method according to the preceding claim, **characterized in that** the layer is formed by coating, spraying, dipping, plasma spraying or vacuum slip casting on the surface of the substrate before sintering.

3. The method of any one of the preceding claims, **characterized in that** a substrate formed of Al₂O₃, mullite, spinel, forsterite, ZrO₂, a silicate ceramic material, an electrically conductive ceramic material, or a metal or metal alloy is used.

4. The method according to any one of the preceding claims, **characterized in that** an electrically conductive ceramic substrate material consisting of Nb-doped TiO₂, Ca₁₋ₓLaₓTiO₃ or Sr₁₋ₓYₓTiO₃ or a mixture of these components with Al₂O₃, mullite, spinel, forsterite, ZrO₂ or a silicate ceramic material is used.

5. The method of any one of the preceding claims, **characterized in that** a substrate is used that has a porosity in the range of 30% to 80%.

## Revendications

1. Procédé de fabrication d'un élément conducteur d'ions sodium destiné à être utilisé dans des cellules électrochimiques, en particulier comme électrolyte solide/séparateur dans des batteries haute température, dans lequel un revêtement est formé sur une surface d'un substrat poreux qui est constitué du système Na₂O-SiO₂-R₂O₅-R1₂O₃, dans lequel R1 = Sc, Y, La et/ou B et R2 = P, Sb, Bi, Sn, Te, Zn et/ou Ge,
**caractérisé en ce qu'**une poudre composée de 47 % en moles à 63 % en moles de SiO₂, 33 % en moles à 43 % en moles de Na₂O, 3 % en moles à 14 % en moles de R1₂O₃ et 0,1 % en moles à 10 % en moles de R2₂O₅ est appliquée sous forme de pâte ou de suspension contenant ladite poudre sur une surface du substrat poreux pour former une couche, puis un frittage est réalisé à une température maximale de 1100 °C de manière à former un revêtement sur la surface du substrat, dans lequel R1 est du scandium, de l'yttrium, du lanthane et/ou du bore et R2 est du phosphore, de l'antimoine, du bismuth, de l'étain, du tellure, du zinc et/ou du germanium.

2. Procédé selon la revendication précédente, **caractérisé en ce que** la couche est formée par raclage, pulvérisation, immersion, projection plasma ou coulage en barbotine sous vide sur la surface du substrat avant le frittage.

3. Procédé selon l'une des revendications précédentes, **caractérisé en ce que** le substrat utilisé est formé d'Al₂O₃, de mullite, de spinelle, de forstérite, de ZrO₂, d'un matériau céramique silicaté, d'un matériau céramique conducteur d'électricité, d'un métal ou d'un alliage métallique.

4. Procédé selon l'une des revendications précédentes, **caractérisé en ce que** le matériau de substrat céramique conducteur d'électricité utilisé est constitué de TiO₂ dopé au Nb, de Ca₁₋ₓLaₓTiO₃, de Sr₁₋ₓYₓTiO₃ ou d'un mélange de ces composants avec Al₂O₃, de la mullite, du spinelle, de la forstérite, ZrO₂ ou un matériau céramique silicaté.

5. Procédé selon l'une des revendications précédentes, **caractérisé en ce que** le substrat utilisé présente une porosité de l'ordre de 30 % à 80 %.
